# DEMANDE DE BREVET EUROPEEN

(11) **EP 4 778 692 A1**
(43) Date de publication de la demande: **22.07.2026**
(21) Numéro de dépôt: 26151382.4
(22) Date de dépôt: 12.01.2026
(51) Int. Cl.: B29B 17/02, B29K 77/00, B29L 9/00

(54) **PROCÉDÉ DE RECYCLAGE DE PRODUITS COMPOSITES MULTICOUCHES DONT AU MOINS UNE COUCHE D'ARAMIDE, PAR IMMERSION DANS UN SOLVANT EUTECTIQUE PROFOND (DES)**

(30) Priorité: 15.01.2025 FR 2500438
(71) Demandeur: Commissariat à l'Energie Atomique et aux Energies Alternatives, 75015 Paris (FR)
(72) Inventeur: AUGER, Aurélien, 38054 Grenoble cedex 09 (FR); DELLEA, Olivier, 38054 Grenoble cedex 09 (FR)
(74) Mandataire: Ipsilon

(57) **Abrégé**

L'invention concerne un procédé de recyclage d'un produit composite neuf défectueux, ou usagé, comprenant initialement au moins une couche d'aramide et au moins une couche en un autre matériau, le procédé comprenant une étape d'immersion de tout ou partie du produit, dans au moins un solvant eutectique profond (DES), de sorte à séparer physiquement la couche d'aramide de l'autre au moins un matériau.

## Description

### Domaine technique

La présente invention concerne le domaine du recyclage des produits composites neufs défectueux ou usagés qui sont constitués de plusieurs couches dont au moins une couche d'aramide, notamment de couches de fibres d'aramide.

Par « produit neuf défectueux », on entend ici et dans le cadre de l'invention, un produit neuf mais n'ayant pas servi ou le cas échéant un produit issu d'une chute de production.

Par « produit usagé », on entend ici et dans le cadre de l'invention, un produit qui a déjà servi et qui est donc post-consommation.

Bien que décrite en référence à une application au recyclage de textiles multicouches, tels que des gilets pare-balles, l'invention peut être mise en œuvre pour le recyclage de tout produit composite multicouches, laminé ou non, imprégné ou non, intégrant au moins une couche d'aramide.

### Technique antérieure

Dans le cadre de l'économie circulaire, on cherche de plus en plus à recycler des produits divers et variés, lorsqu'ils sont à l'état de déchets, i.e. qu'ils ne peuvent plus être utilisés.

La croissance technologique des munitions et des armes de pointe a conduit au développement des produits composites antibalistiques de protection qui sont principalement à base de fibres d'aramide, car elles absorbent l'énergie d'impact élevée provenant des pénétrateurs.

Parmi les fibres de types aramide, on distingue la fibre méta-aramide, connue sous le nom commercial Nomex^{®}, commercialisée en 1961 par Dupont de Nemours et la fibre para-aramide connue sous le nom commercial Kevlar^{®}, synthétisée en 1965 par S. Kwolek chez Dupont de Nemours aux US. A titre de fibres d'aramide peuvent aussi être citées les fibres connues sous le nom commercial Kermel^{®}.

A cause de leur structure macromoléculaire différente, les fibres méta-aramides ont une résistance en traction plus faible que les fibres para-aramides. En revanche, elles sont thermiquement et chimiquement plus stables et sont très prisées dans les applications concernant la protection (vêtements, filtres industriels) pour leur résistance au feu et aux agents chimiques.

Les fibres para-aramides, du fait de leur degré élevé d'orientation lors du procédé de filage, possèdent une résistance élevée en traction et une faible densité. Ces caractéristiques ont permis de les utiliser dans de nombreux domaines comme :
- la protection balistique (souple ou rigide),
- les renforts dans les élastomères (pneumatiques, tuyaux),
- les cordages et câbles,
- les renforts de faisceaux de fibres optiques,
- les renforts pour matériaux composites.

Sous forme de fibres courtes, les fibres para-aramides sont utilisées pour la fabrication de gants et de vêtements de protection. Sous forme de pulpe, elles sont utilisées dans les applications où de bonnes résistances à la chaleur et à l'abrasion sont requises, comme pour des disques d'embrayage, plaquettes de frein, joints...

On pourra se reporter à la publication [1] pour les principales propriétés des fibres d'aramide.

Comme les autres polymères organiques et, de plus, aromatiques, le polymère aramide est sensible à l'action des UV. Une exposition prolongée aux UV peut causer un changement de couleur de la fibre, voire une perte de ses propriétés physiques. Une caractéristique propre aux polyamides est leur reprise d'humidité plus importante que celle des fibres de carbone et de verre.

Leur faible masse volumique et leur haute résistance en traction ont permis aux fibres para-aramides de bas module d'acquérir une notoriété dans le domaine de la protection balistique souple (gilets pare-balles) ou rigide (casques et panneaux).

La fabrication d'un gilet pare-balles à partir de fibres d'aramide, comme le Kevlar^{®} comprend les étapes suivantes :
- une superposition de couches de tissus ou de fibres alignées, notamment sous forme de nappes unidirectionnelles ou de différentes contextures textiles, pour former un panneau balistique, le nombre de couches dépendant du niveau de protection souhaité,
- un assemblage par couture ou collage ou thermocompression,
- un traitement anti-humidité, notamment par ensachage et une application d'une housse externe, le cas échéant avec un ou des revêtements de finition.

Des méthodologies telles que la technique dite couche par couche, l'épaississement par cisaillement, l'arrachage de fil et la fonctionnalisation de surface via des nanomatériaux ont été rapportées pour modifier les fibres d'aramide.

Ces fibres d'aramide modifiées sont largement utilisées avec des thermodurcissables tels que l'époxy, en raison de leur facilité de mise en œuvre. Cependant, la fragilité des résines thermodurcissables n'est pas souhaitable dans les applications à fort impact.

Des produits formés de tissus épais en aramide imprégnés d'une colle de type résine époxy sont déjà commercialisé. Le tissu en aramide ainsi imprégné est prêt à être inséré dans un gilet à fonction pare-balles lui procurant tous les avantages intrinsèques de l'aramide, à savoir une haute résistance mécanique, une faible densité, une bonne isolation thermique, une barrière chimique efficace et une propriété ignifuge.

Dans la conception des gilets pare-balles à base d'aramide, des matériaux additionnels peuvent être appliqués sur les fibres ou entre les couches pour apporter certaines fonctionnalités dans le but d'améliorer les performances recherchées que l'on peut énumérer comme suit:
- une durabilité du Kevlar^{®} atteinte par une protection du tissu au moyen d'un revêtement polymère comme le polyuréthane ou le silicone, contre l'humidité, les produits chimiques et l'abrasion, ce qui empêche le délaminage des couches de Kevlar^{®},
- un traitement anti-balles, pour augmenter la capacité à arrêter les projectiles grâce à une substance visqueuse améliorant l'adhésion entre les couches de Kevlar^{®}, empêchant la pénétration des projectiles : [2],
- l'utilisation d'un adhésif, tel qu'une résine époxy ou PU pour l'assemblage, de sorte à garantir que les couches restent en place et qu'il n'y a pas de déplacement pendant l'utilisation: [3],
- l'utilisation d'un gel de dissipation thermique, tel qu'un silicone ou autres polymères viscoélastiques pour améliorer la dissipation de l'énergie lors de l'impact d'une balle : [4],
- une hydrophobie ou résistance aux produits chimiques obtenue par revêtement de produits fluoropolymères par exemple, pour améliorer la performance dans des environnements complexes.

En outre, de nombreuses voies sont encore explorées pour modifier les fibres aramides notamment par l'ajout de nanomatériaux, tels que les nanotubes de carbone, le graphène, les fibres de soie, le SiO₂ et le ZnO, afin d'améliorer leurs performances et de minimiser le flambage des fibres sous l'effet de la charge.

Cependant, plus la structure d'un produit composite à base d'aramide est complexifiée par l'ajout de différents matériaux avec des propriétés et des fonctionnalités spécifiques, plus le recyclage du composite sera complexe dans la phase de séparation des matériaux et pour retrouver des fibres aux mêmes performances qu'initialement.

La littérature scientifique est abondante dans le recyclage des composites à base de fibres de verre, de carbone, de nylon.

En revanche, peu de travaux portent sur le recyclage des composites à base d'aramide, alors qu'il y a de toute évidence un intérêt économique comme le montre le tableau 1 ci-dessous qui compare le prix estimé par comparaison à d'autres matériaux sous forme de fibres.

**[Tableau 1]**

| Nature des fibres | Prix estimé par kg (Euros) | Coût énergétique de production (MJ/kg) |
|---|---|---|
| Carbone | 18 à 90 | 600 à 800 |
| Verre | 0,90 à 4,50 | 15 à 35 |
| Nylon | 1,80 à 3,60 | 200 à 300 |
| Aramide | 27 à 63 | 500 à 600 |

Ainsi, outre le fait que sa fabrication est très énergivore et la synthèse de fibres d'aramide nécessite l'utilisation de produits chimiques toxiques pour les opérateurs, et polluants pour l'environnement, un recyclage de fibres d'aramide a donc un intérêt également évident pour l'environnement.

Dans son rapport sur ses actions dans le développement durable, daté de 2023 et publié en ligne, le fabricant Teijin Aramid, décrit les différentes voies de recyclage des fibres d'aramide issues de rebuts, usagées, contaminées, avec ou sans traitement. D'après ce fabricant, la voie mécanique par broyage, est la voie la plus mure sur le plan technologique, les fibres continues d'aramide étant transformées pour former une pâte visqueuse (pulpe). Sous cette forme, le nouveau matériau obtenu est utilisé en remplacement d'autres matériaux comme l'amiante. Cette approche peut être néanmoins qualifiée de « down cycling » ou de décyclage.

Les auteurs des publications [5] et [6] précisent que la décomposition d'une fibre d'aramide survient au-dessus de 500 °C mais ceci peut varier en fonction du type d'aramide. Dans ces conditions, la voie thermique peut être une approche pour le recyclage des composites aramide.

La publication [7] rend compte d'un procédé de recyclage par pyrolyse d'un composite à base de fibres aramide et de néoprène. Le procédé de dégradation thermique est en plusieurs étapes, la première consiste à chauffer le composite à 300 °C pendant 15 h en absence d'oxygène, puis de séparer les couches qui se délaminent pour augmenter la surface d'échange, la seconde étape consiste à monter à 350 °C pendant 5 h. Sur le plan économique et environnemental, la voie thermique parait peu viable de par la consommation énergétique qu'elle implique et en considérant que les fibres récupérées à la fin du processus doivent être nettoyées des résidus carbonés présents à leur surface.

La publication [8] évoque quant à elle qu'un recyclage satisfaisant est celui qui permet de retrouver le matériau d'origine sans dégrader ses propriétés ni sa forme d'origine.

Du point de vue des inventeurs de la présente invention, un recyclage optimal est celui qui requiert une faible consommation énergétique et en utilisant des produits non dangereux et abondants.

Par conséquent, il existe un besoin de proposer une solution de recyclage qui permette de séparer efficacement l'aramide des autres différents matériaux constitutifs d'un produit composite, sans en altérer ni les propriétés, ni la forme.

Un besoin particulier est que la solution soit rapide, typiquement en quelques heures, versatile, i.e. capable de traiter les produits de différents fournisseurs, non dangereuse, peu énergivore et qui permette de récupérer des fibres d'aramide sans résidu de traitement.

Le but de l'invention est de répondre au moins partiellement à ce(s) besoin(s).

### Exposé de l'invention

Pour ce faire, l'invention concerne, sous l'un de ses aspects, un procédé de recyclage, d'un produit composite neuf défectueux, ou usagé, comprenant initialement au moins une couche d'aramide et au moins une couche en un autre matériau, le procédé comprenant une étape d'immersion de tout ou partie du produit, dans au moins un solvant eutectique profond (DES), de sorte à séparer physiquement la couche d'aramide de l'autre au moins un matériau.

Les solvants eutectiques profonds, également appelés DES (acronyme anglo-saxon pour « Deep Eutectic Solvents »), sont généralement composés de deux ou plusieurs constituants, notamment deux ou trois constituants, qui sont capables d'auto-association, en particulier par des liaisons hydrogène ou des liaisons de van der Waals, pour former un mélange eutectique présentant un point de fusion inférieur à celui de chaque constituant pris individuellement. En particulier, les DES selon l'invention sont composés d'un mélange de deux ou plusieurs constituants distincts, notamment de deux constituants distincts, les constituants dudit mélange étant de préférence mis en œuvre dans les proportions correspondant au point eutectique dudit mélange.

Les DES consistent généralement en un mélange d'au moins un acide et d'au moins une base pouvant comporter une ou plusieurs espèces anioniques et/ou cationiques, l'acide et la base étant notamment un acide et une base de Lewis ou un acide et une base de Brønsted. En particulier, les DES peuvent consister en un mélange d'au moins un composé accepteur de liaison hydrogène, également appelé composé HBA (acronyme anglo-saxon pour « Hydrogen Bond Acceptor ») ou premier composé, et d'au moins un composé donneur de liaison hydrogène, également appelé composé HBD (acronyme anglo-saxon pour « Hydrogen Bond Donor ») ou deuxième composé. Il est entendu que le composé HBA est distinct du composé HBD.

Les DES sont généralement non toxiques, biodégradables, non volatils et/ou ininflammables, et donc plus respectueux de l'environnement que de nombreux solvants. De plus, ils peuvent être issus de molécules biosourcées. Ils ont un haut degré de flexibilité structurelle. Enfin, leur procédé de préparation est simple, peu coûteux et en particulier ne nécessite aucune étape de purification. Des exemples de DES sont décrits dans la publication [9].

Avantageusement, le solvant eutectique profond (DES) mis en œuvre dans l'étape d'immersion est non ionique. Au sens de l'invention, par « DES non ionique », on entend signifier que les constituants du DES sont non ioniques, c'est-à-dire que les constituants du DES ne comportent pas de charge.

Le solvant eutectique profond (DES) mis en œuvre dans l'étape d'immersion peut être hydrophile ou hydrophobe. Avantageusement, le solvant eutectique profond (DES) mis en œuvre dans l'étape d'immersion est hydrophobe, en particulier non ionique. Au sens de l'invention, par « DES hydrophobe », on entend signifier que le DES est peu voire non miscible avec l'eau, en particulier présente une solubilité dans l'eau inférieure ou égale à 70 g/L, notamment inférieure ou égale à 40 g/L, voire inférieure ou égale à 30 g/L, voire même inférieure ou égale à 20 g/L. Des exemples de DES hydrophobes ont été décrits par Makoś *et al.* [10]. Au sens de l'invention, par « DES hydrophile », on entend signifier que le DES est miscible avec l'eau.

En particulier, le solvant eutectique profond (DES) comprend au moins un composé accepteur de liaison hydrogène (HBA) choisi parmi les monoterpénoïdes comportant au moins un groupe fonctionnel oxygéné et leurs mélanges, en particulier parmi les monoterpénoïdes comportant au moins un groupe hydroxyle, les monoterpénoïdes comportant au moins un groupe carbonyle, les monoterpénoïdes comportant au moins un groupe éther cyclique et leurs mélanges, plus particulièrement parmi le menthol, la carvone, le thymol, le bornéol, le carvacrol, l'eucalyptol et leurs mélanges, notamment parmi le menthol, le thymol et leur mélange, de préférence le solvant eutectique profond (DES) comprend au moins le thymol.

En particulier, le solvant eutectique profond (DES) comprend au moins un composé donneur de liaison hydrogène (HBD) choisi parmi le 4-diméthylaminobenzaldéhyde, les composés de formule HR^{a}N-C(=X)-R^{d} (I), avec X étant choisi parmi un atome d'oxygène et un atome de soufre, R^{a} étant choisi parmi un atome d'hydrogène et un radical alkyle linéaire ou ramifié en C₁ à C₄ pouvant être substitué par un ou plusieurs groupes hydroxyles, et R^{d} étant choisi parmi un radical alkyle linéaire ou ramifié en C₁ à C₄ pouvant être substitué par un ou plusieurs groupes hydroxyles, et un radical -NR^{b}R^{c} avec R^{b} étant choisi parmi un atome d'hydrogène et un radical alkyle linéaire ou ramifié en C₁ à C₄ pouvant être substitué par un ou plusieurs groupes hydroxyles, et R^{c} étant choisi parmi un atome d'hydrogène, un radical alkyle linéaire ou ramifié en C₁ à C₄ pouvant être substitué par un ou plusieurs groupes hydroxyles, et un radical -C(=X)-NR R^{k} avec X étant tel que défini précédemment et R^{j} et R^{k} étant indépendamment l'un de l'autre choisis parmi un atome d'hydrogène et un radical alkyle linéaire ou ramifié en C₁ à C₄ pouvant être substitué par un ou plusieurs groupes hydroxyles, et leurs mélanges, en particulier choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄, de préférence choisi parmi l'urée, la N-méthylurée, la N,N'-diméthylurée, la N,N-diméthylurée, l'acétamide, la N-méthylacétamide et leurs mélanges, plus préférentiellement le solvant eutectique profond comprend au moins l'urée.

Avantageusement, le solvant eutectique profond peut comprendre, voire consister en :
- un mélange d'un composé accepteur de liaison hydrogène (HBA) choisi parmi les monoterpénoïdes comportant au moins un groupe fonctionnel oxygéné et leurs mélanges, et d'un composé donneur de liaison hydrogène (HBD) choisi parmi le 4-diméthylaminobenzaldéhyde, les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄, et leurs mélanges ;

en particulier le DES peut comprendre, voire consister en, un mélange d'un composé accepteur de liaison hydrogène (HBA) choisi parmi les monoterpénoïdes comportant au moins un groupe hydroxyle, les monoterpénoïdes comportant au moins un groupe carbonyle, les monoterpénoïdes comportant au moins un groupe éther cyclique et leurs mélanges, et d'un composé donneur de liaison hydrogène (HBD) choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄;
plus particulièrement le DES peut comprendre, voire consister en, un mélange de thymol et d'un composé donneur de liaison hydrogène (HBD) choisi parmi l'urée, la N-méthylurée, la N,N'-diméthylurée, la N,N-diméthylurée, l'acétamide, la N-méthylacétamide et leurs mélanges ;
de préférence le DES peut comprendre, voire consister en, un mélange de thymol et d'urée dans un rapport molaire thymol : urée compris entre 2:1 et 10:1, notamment entre 4:1 et 6:1, voire entre 4,5:1 et 5,5:1, de préférence égal à 5:1.

La couche d'aramide peut être à base de fibres d'aramide.

L'étape d'immersion peut être réalisée à une température comprise entre 30 et 90°C, en particulier entre 40 et 80°C, plus particulièrement entre 50 et 70°C.

De préférence, l'étape d'immersion est réalisée à une température comprise entre 30 et 90°C, de préférence pendant une durée de 15 min à 3 h, notamment de 1 h à 2 h.

Avantageusement, l'étape d'immersion est réalisée par agitation à une température contrôlée.

En particulier, l'immersion dans le solvant eutectique profond est réalisée dans un rapport massique produit/DES allant de 0,01 à 2, en particulier de 0,1 à 1, plus particulièrement de 0,3 à 0,7.

Le procédé comprend de préférence, pendant ou après l'étape d'immersion, une étape de filtration et de régénération du solvant eutectique profond (DES).

La régénération peut être réalisée soit par barbotage d'azote, soit par changement de température ou de pression, soit par sublimation sous vide.

De préférence, le procédé comprend, après l'étape d'immersion, une étape de séchage de la couche d'aramide séparée physiquement.

L'invention consiste essentiellement en un recyclage de produits composite multicouches avec au moins une couche d'aramide comprenant une immersion dans un solvant eutectique profond, notamment tel que décrit précédemment, qui va permettre de séparer physiquement la couche d'aramide des différents autres matériaux des produits.

Au final, un procédé selon l'invention présente de nombreux avantages majeurs par rapport aux procédés de recyclage selon l'art antérieur, parmi lesquels on peut citer :
- une séparation efficace qui permet de récupérer n'importe quelle couche d'aramide initialement dans un produit composite multicouches;
- une réduction des émissions de CO₂ et à un moindre impact sur l'écosystème. En effet, les DES sont considérés comme des solvants verts en raison de leur faible toxicité, biodégradabilité et moindre impact environnemental comparé aux solvants organiques traditionnels ;
- une réduction du coût de recyclage de l'aramide : les DES sont souvent moins chers à produire et à utiliser que les solvants organiques traditionnels. De plus, leur utilisation peut réduire les coûts liés à la gestion des déchets et au recyclage, car ils permettent de récupérer des matériaux de haute pureté qui peuvent être réutilisés dans la production de nouveaux emballages ou d'autres produits ;
- la possibilité de recyclage de tous types composites, notamment contenant des polymères et métaux : les DES peuvent séparer efficacement les fibres aramides de composites constitués d'un assemblage de polymères, voire de métaux, de céramiques ou d'autres matériaux inorganiques ;
- un procédé assurant la sécurité des opérateurs, avec notamment l'absence de risque d'incendie. Contrairement à de nombreux solvants organiques volatils et inflammables, les DES sont généralement non volatils et présentent un risque moindre d'incendie ou d'explosion, ce qui les rend plus sûrs à manipuler dans les environnements industriels.

Dans le cadre de l'invention, on entend par :
- « C_{t-z} » où t et z sont des entiers, une chaîne carbonée pouvant avoir de t à z atomes de carbone ; par exemple C₁₋₄ une chaîne carbonée qui peut avoir de 1 à 4 atomes de carbone ;
- « groupement hydrocarboné », un radical saturé ou non, linéaire, ramifié ou cyclique, aromatique ou non, comprenant du carbone et de l'hydrogène ;
- « chaîne aliphatique », un groupe hydrocarboné constitué exclusivement d'atomes de carbone et d'hydrogène, linéaire ou ramifié, saturé ou insaturé, non aromatique. De préférence, une chaîne aliphatique est une chaîne alkyle ;
- « alkyle », un groupe aliphatique saturé, linéaire ou ramifié ; par exemple un groupe C₁₋₄-alkyle représente une chaîne carbonée de 1 à 4 atomes de carbone, linéaire ou ramifiée, plus particulièrement un méthyle, éthyle, propyle, isopropyle, butyle, isobutyle, tert-butyle *;*
- « alcényle », un groupe aliphatique mono- ou poly-insaturé, linéaire ou ramifié ;
- « alkylène », un radical divalent saturé, linéaire ou ramifié, dérivé d'un alkyle. Par exemple un groupe C₁-C₃-alkylène représente une chaine carbonée saturée, linéaire ou ramifiée, de 1 à 3 atomes de carbone, par exemple un méthylène, éthylène, 1-méthyléthylène ou propylène ;
- « groupe fonctionnel oxygéné » un groupe fonctionnel comprenant au moins un atome d'oxygène, en particulier un groupe fonctionnel constitué exclusivement d'atomes d'oxygène et optionnellement d'atomes de carbone et/ou d'hydrogène, par exemple un groupe hydroxyle, un groupe carbonyle, un groupe ester ou un groupe éther.

Dans la suite du texte, les expressions « compris entre ... et ... », « allant de ... à ... » et « variant de ... à ... » sont équivalentes et entendent signifier que les bornes sont incluses, sauf mention contraire.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 représente un synoptique d'un exemple de procédé de recyclage selon l'invention mis en œuvre dans un réacteur.
[Fig 2A], [Fig 2B] les figures 2A et 2B montrent un échantillon de textile multicouches laminé de fibres aramides laminées avec un film PU, ainsi que son spectre caractéristique obtenu par spectroscopie infrarouge à transformée de Fourier (FTIR), respectivement avant sa mise dans le réacteur et après le séchage en sortie du réacteur du morceau de fibres d'aramides obtenu.
[Fig 3A], [Fig 3B] les figures 3A et 3B montrent un échantillon de textile laminé de fibres aramides enduites avec un film PE, ainsi que son spectre FTIR, respectivement avant sa mise dans le réacteur et après le séchage en sortie du réacteur du morceau de fibres d'aramides obtenu.
[Fig 4A], [Fig 4B] les figures 4A et 4B montrent un échantillon de textile laminé de fibres aramides enduites avec une résine PA, ainsi que son spectre FTIR, respectivement avant sa mise dans le réacteur et après le séchage en sortie du réacteur du morceau de fibres d'aramides obtenu.
[Fig 5A], [Fig 5B] les figures 5A et 5B sont des reproductions photographiques montrant un échantillon textile multicouches laminé de fibres aramides laminées avec un film PU respectivement avant et après le procédé selon l'invention.
[Fig 6A], [Fig 6B] les figures 6A et 6B sont des reproductions photographiques montrant un échantillon textile laminé de fibres aramides laminées avec une résine PA, respectivement avant et après le procédé selon l'invention.

### Description détaillée

### Solvant Eutectique profond (DES)

Un DES convenant au procédé selon l'invention et à l'installation selon l'invention peut combiner au moins un composé donneur de liaison hydrogène (composé HBD), à au moins un composé accepteur de liaison hydrogène (composé HBA).

Chacun de ces composés peut être formé par un unique composé ou un mélange d'au moins deux composés.

Comme précisé dans Makoś *et al.* [10], dans le cas des DES non ioniques, il peut être difficile d'attribuer un caractère HBD ou HBA à chacun des composés. Les composés HBD, respectivement HBA, peuvent être considérés dans la littérature comme composés HBA, respectivement composés HBD. Par exemple, un composé HBD, respectivement HBA, vis-à-vis d'un composé peut être considéré comme composé HBA, respectivement HBD, vis-à-vis d'un autre composé.

### Composé accepteur de liaison hydrogène (HBA)

Le composé HBA peut être choisi parmi les sels halogénés d'ammonium, de phosphonium ou de sulfonium.

Le sel halogéné peut être un sel de fluorure, de chlorure, de bromure ou d'iodure, en particulier de chlorure ou de bromure. En particulier, le sel halogéné d'ammonium, de phosphonium ou de sulfonium est un chlorure d'ammonium, de phosphonium ou de sulfonium.

Le sel halogéné peut être un sel halogéné d'ammonium primaire, secondaire, tertiaire ou quaternaire. Le sel halogéné peut être par exemple de formule R¹R²R³R⁴N⁺A⁻, avec A un atome d'halogène et R¹, R², R³ et R⁴ étant indépendamment les uns des autres un atome d'hydrogène ou un radical alkyle linéaire ou ramifié en C₁ à C₂₂ pouvant être substitué par un ou plusieurs groupes hydroxyles, phényles, -COOH, -C(O)OR', -OR' avec R' étant un radical alkyle en C₁ à C₅, -COCl, -OCOCl, -Cl ou -F, en particulier au moins un, notamment au moins deux, voire au moins trois, voire même au moins quatre de R¹, R², R³ et R⁴ étant un radical alkyle linéaire ou ramifié tel que défini précédemment. Selon un mode de réalisation particulier, R¹, R², R³ et R⁴ sont indépendamment les uns des autres un radical alkyle linéaire ou ramifié en C₁ à C₂₂, en particulier R¹, R² et R³ sont indépendamment les uns des autres un radical alkyle linéaire ou ramifié en C₄ à C₂₂, notamment en C₄ à C₁₂, plus particulièrement R¹, R², R³ et R⁴ sont indépendamment les uns des autres un radical alkyle linéaire ou ramifié en C₄ à C₂₂, notamment en C₄ à C₁₂, voire en C₄ à C₈.

Le sel halogéné peut aussi être un sel halogéné de phosphonium primaire, secondaire, tertiaire ou quaternaire. Le sel halogéné peut être par exemple de formule R¹R²R³R⁴P⁺A⁻, avec A, R¹, R², R³ et R⁴ étant tels que définis précédemment.

Le sel halogéné peut aussi être un sel halogéné de sulfonium. Le sel halogéné peut être par exemple de formule R^{I}R²R³S⁺A⁻, avec A étant tel que défini précédemment et R¹, R² et R³ étant indépendamment les uns des autres un radical alkyle linéaire ou ramifié en C₁ à C₂₂, notamment en C₄ à C₈, pouvant être substitué par un ou plusieurs groupes hydroxyles, phényles, -COOH, -C(O)OR', -OR' avec R' étant un radical alkyle en C₁ à C₅, -COCl, - OCOCl, -Cl ou -F.

L'atome d'halogène A peut être un atome de fluor, de chlore, de brome ou d'iode.

Par exemple, le DES peut comprendre au moins un sel d'ammonium quaternaire halogéné ou un sel de phosphonium quaternaire halogéné, en particulier au moins un sel d'ammonium quaternaire halogéné, à titre de composé HBA.

Le DES peut en particulier comprendre un chlorure ou un bromure d'ammonium quaternaire, en particulier un chlorure d'ammonium quaternaire, à titre de composé accepteur de liaison hydrogène.

En particulier, le composé HBA peut être choisi parmi les halogénures de choline, les halogénures de N-éthyl-2-hydroxy-N,N-diméthyléthanaminium, les halogénures de 2-(chlorocarbonyloxy)-N,N,N-triméthyl-ethanaminium, les halogénures de N-benzyl-2-hydroxy-N,N-diméthyléthanaminium, les halogénures de tétrabutylammonium, les halogénures de méthyltrioctylammonium, les halogénures de tétraoctylammonium, les halogénures d'éthyltrioctylammonium, les halogénures de tétraheptylammonium et leurs mélanges, en particulier parmi les chlorures de choline, les chlorures de N-éthyl-2-hydroxy-N,N-diméthyléthanaminium, les chlorures de 2-(chlorocarbonyloxy)-N,N,N-triméthyl-ethanaminium, les chlorures de N-benzyl-2-hydroxy-N,N-diméthyléthanaminium, les chlorures de tétrabutylammonium, les chlorures de méthyltrioctylammonium, les chlorures de tétraoctylammonium, les chlorures d'éthyltrioctylammonium, les chlorures de tétraheptylammonium et leurs mélanges.

Le composé HBA peut aussi être choisi parmi les monoterpénoïdes comportant au moins un groupe fonctionnel oxygéné et leurs mélanges, notamment parmi les monoterpénoïdes comportant au moins un groupe hydroxyle, les monoterpénoïdes comportant au moins un groupe carbonyle, les monoterpénoïdes comportant au moins un groupe ester, les monoterpénoïdes comportant au moins un groupe éther cyclique et leurs mélanges. Plus particulièrement, le composé accepteur de liaison hydrogène peut être choisi parmi le thymol (5-méthyl-2-(propan-2-yl)-phénol), le menthol (5-methyl-2-(propan-2-yl)cyclohexan-1-ol), la carvone (5-isopropenyl-2-methyl-2-cyclohexénone), l'eucalyptol (1,8-cinéol), le bornéol, le carvacrol, l'acétate de bornyle, le camphre, le citral, le citronellal, le géraniol, l'hinokitiol, l'iridoïde, le linalol et leurs mélanges.

En particulier, le composé HBA peut être choisi parmi les monoterpénoïdes comportant au moins un groupe hydroxyle, les monoterpénoïdes comportant au moins un groupe carbonyle, les monoterpénoïdes comportant au moins un groupe éther cyclique, et leurs mélanges, notamment parmi le thymol, le menthol, la carvone, le bornéol, le carvacrol, l'eucalyptol et leurs mélanges.

Plus particulièrement, le composé HBA peut être choisi parmi les monoterpénoïdes comportant au moins un groupe hydroxyle, les monoterpénoïdes comportant au moins un groupe carbonyle, et leurs mélanges, notamment parmi le thymol, le menthol, la carvone et leurs mélanges.

En particulier, le composé HBA peut être choisi parmi les monoterpénoïdes comportant au moins un groupe hydroxyle et leurs mélanges. De préférence, le DES comprend, à titre de composé HBA, au moins le thymol, le menthol ou leur mélange, plus préférentiellement au moins le thymol.

Le composé HBA peut aussi être choisi parmi les benzènes substitués par un groupe -NH-C(=O)-Y avec Y représentant une chaîne aliphatique linéaire ou ramifiée, saturée ou insaturée, interrompue par au moins un atome d'azote, le benzène étant optionnellement substitués un ou plusieurs radicaux alkyles linéaires ou ramifiés en C₁ à C₅, notamment en C₁ à C₃. En particulier, Y représente un groupement -(CH₂)ₚ-N-R^{h}Rⁱ, dans lequel p est un entier compris entre 1 et 5, notamment entre 1 et 3, voire égal à 1, R^{h} et R' sont indépendamment l'un de l'autre un radical alkyle linéaire ou ramifié en C₁ à C₅, notamment en C₁ à C₃, voire un groupe éthyle.

En particulier, le composé HBA peut être la lidocaïne (2-(diéthylamino)-N-(2,6-diméthylphényl)acétamide).

Le composé HBA peut aussi être choisi parmi les acides carboxyliques comprenant une ou plusieurs fonctions carboxyliques, en particulier parmi les acides monocarboxyliques, les acides dicarboxyliques et les acides tricarboxyliques, plus particulièrement parmi les acides dicarboxyliques.

Le composé HBA peut être un acide monocarboxylique choisi parmi :
- les acides monocarboxyliques hydrocarbonés non aromatiques, non substitués, saturés ou insaturés, linéaires ou ramifiés, en particulier parmi les acides monocarboxyliques hydrocarbonés non aromatiques, non substitués, saturés ou insaturés, linéaires ou ramifiés, possédant de 1 à 24 atomes de carbone, en particulier de 6 à 20 atomes de carbone, voire de 6 à 18 atomes de carbone ; et
- les acides monocarboxyliques aromatiques saturés ou insaturés, en particulier parmi les acides monocarboxyliques aromatiques saturés ou insaturés possédant de 6 à 12 atomes de carbone, en particulier possédant 7 atomes de carbone.

Le composé HBA peut être choisi parmi l'acide formique, l'acide benzoïque, l'acide hexanoïque, l'acide heptanoïque, l'acide octanoïque, l'acide décanoïque, l'acide dodécanoïque, l'acide myristique, l'acide palmitique, l'acide stéarique, l'acide linoléique, l'acide oléique et leurs mélanges.

En particulier, le composé HBA peut être choisi parmi les acides monocarboxyliques aliphatiques non substitués, saturés ou insaturés, linéaires ou ramifiés, possédant de 6 à 20 atomes de carbone, en particulier de 6 à 18 atomes de carbone, notamment de 8 à 14 atomes de carbone, voire de 10 à 12 atomes de carbone, plus particulièrement parmi les acides monocarboxyliques aliphatiques non substitués, saturés et linéaires possédant de 6 à 20 atomes de carbone, en particulier de 6 à 18 atomes de carbone, notamment de 8 à 14 atomes de carbone, voire de 10 à 12 atomes de carbone.

Un acide monocarboxylique aliphatique peut être un composé de formule R¹-COOH, avec R¹ étant un groupe alkyle linéaire ou ramifié en C₅ à C₁₉ ou un groupe alcényle linéaire ou ramifié en C₅ à C₁₉, en particulier R¹ étant un groupe alkyle linéaire ou ramifié en C₅ à C₁₉.

Un acide monocarboxylique aliphatique non substitué, saturé et linéaire peut être un composé de formule CH₃-(CH₂)ₙ-COOH, avec n étant un entier compris entre 4 et 18, en particulier entre 4 et 18, notamment entre 6 et 12, voire entre 8 et 10.

En particulier, le composé HBA peut être choisi parmi l'acide hexanoïque, l'acide octanoïque, l'acide décanoïque, l'acide dodécanoïque, l'acide myristique, l'acide linoléique, l'acide oléique et leurs mélanges, plus particulièrement parmi l'acide hexanoïque, l'acide octanoïque, l'acide décanoïque, l'acide dodécanoïque, l'acide myristique et leurs mélanges. En particulier, le DES comprend, à titre de composé HBA, au moins l'acide décanoïque, l'acide dodécanoïque ou leurs mélanges, plus particulièrement au moins l'acide décanoïque.

Le composé HBA peut être un acide dicarboxylique choisi parmi :
- les acides dicarboxyliques hydrocarbonés non aromatiques, non substitués, saturés ou insaturés, linéaires ou ramifiés, possédant de 2 à 10 atomes de carbone, en particulier de 3 à 8 atomes de carbone, voire de 4 à 6 atomes de carbone.
- les acides dicarboxyliques aromatiques possédant de 7 à 13 atomes de carbone, en particulier possédant 8 atomes de carbone.

Le composé HBA peut être un acide dicarboxylique choisi parmi l'acide téréphtalique et les acides dicarboxyliques hydrocarbonés non aromatiques, non substitués, saturés ou insaturés, linéaires ou ramifiés, possédant de 2 à 10 atomes de carbone, en particulier de 3 à 8 atomes de carbone, voire de 4 à 6 atomes de carbone.

En particulier, le composé HBA peut être un acide dicarboxylique choisi parmi les acides dicarboxyliques hydrocarbonés non aromatiques, non substitués, saturés ou insaturés, linéaires ou ramifiés, possédant de 2 à 10 atomes de carbone, notamment de 3 à 8 atomes de carbone, voire de 4 à 6 atomes de carbone, en particulier parmi les acides dicarboxyliques hydrocarbonés non aromatiques, non substitués, saturés, linéaires ou ramifiés, possédant de 2 à 10 atomes de carbone, notamment de 3 à 8 atomes de carbone, voire de 4 à 6 atomes de carbone, plus particulièrement parmi les acides dicarboxyliques hydrocarbonés non aromatiques, non substitués, saturés et linéaires, possédant de 2 à 10 atomes de carbone, notamment de 3 à 8 atomes de carbone, voire de 4 à 6 atomes de carbone.

Le composé HBA peut être choisi parmi les acides dicarboxyliques linéaires et saturés de formule HOOC-(CH₂)_{q}-COOH dans laquelle q est un entier compris entre 0 et 8.

En particulier, le composé donneur de liaison hydrogène peut être choisi parmi l'acide oxalique, l'acide malonique, l'acide succinique, l'acide adipique, l'acide azélaique et leurs mélanges. En particulier, le DES peut comprendre, à titre de composé HBA, au moins l'acide succinique.

Le composé HBA peut aussi être un acide tricarboxylique, éventuellement substitués par un ou plusieurs groupes hydroxyles, en particulier l'acide citrique.

De préférence, le solvant eutectique profond (DES) comprend au moins un composé accepteur de liaison hydrogène (HBA) choisi parmi les monoterpénoïdes comportant au moins un groupe fonctionnel oxygéné, en particulier parmi les monoterpénoïdes comportant au moins un groupe hydroxyle, les monoterpénoïdes comportant au moins un groupe carbonyle, les monoterpénoïdes comportant au moins un groupe éther cyclique et leurs mélanges, plus particulièrement parmi le menthol, la carvone, le thymol, le bornéol, le carvacrol, l'eucalyptol et leurs mélanges, notamment parmi le thymol, le menthol et leur mélange, de préférence le solvant eutectique profond (DES) comprend au moins le thymol.

### Composé donneur de liaison hydrogène (HBD)

Le composé HBD peut être choisi parmi les composés de formule (1) :

HR^{a}N-C(=X)-R^{d} (1)

avec :
- X étant choisi parmi un atome d'oxygène et un atome de soufre,
- R^{a} étant choisi parmi un atome d'hydrogène et un radical alkyle linéaire ou ramifié en C₁ à C₄, pouvant être substitué par un ou plusieurs, notamment un ou deux, groupes hydroxyles, et
- R^{d} étant choisi parmi un radical alkyle linéaire ou ramifié en C₁ à C₄ pouvant être substitué par un ou plusieurs, notamment un ou deux, groupes hydroxyles, un radical phényl pouvant être substitué par un ou plusieurs, notamment un ou deux, groupes hydroxyles, et un radical
- NR^{b}R^{c} avec R^{b} étant choisi parmi un atome d'hydrogène et un radical alkyle linéaire ou ramifié en C₁ à C₄ pouvant être substitué par un ou plusieurs, notamment un ou deux, groupes hydroxyles, et R^{c} étant choisi parmi un atome d'hydrogène, un radical alkyle linéaire ou ramifié en C₁ à C₄ pouvant être substitué par un ou plusieurs, notamment un ou deux, groupes hydroxyles, et un radical -C(=X)-NR^{j}R^{k} avec X étant tel que défini précédemment et R^{j} et R^{k} étant indépendamment l'un de l'autre choisis parmi un atome d'hydrogène et un radical alkyle linéaire ou ramifié en C₁ à C₄ pouvant être substitué par un ou plusieurs, notamment un ou deux, groupes hydroxyles,
en particulier R^{d} étant choisi parmi un radical alkyle linéaire ou ramifié en C₁ à C₄ pouvant être substitué par un ou plusieurs groupes hydroxyles et un radical -NR^{b}R^{c} avec R^{b} et R^{c} étant tels que définis précédemment.

En particulier, le composé HBD peut être choisi parmi les composés de formule (I) avec :
- X étant choisi parmi un atome d'oxygène et un atome de soufre, en particulier étant l'atome d'oxygène,
- R^{a} étant choisi parmi un atome d'hydrogène et un radical alkyle linéaire ou ramifié en C₁ à C₄, en particulier parmi un atome d'hydrogène et un radical alkyle linéaire ou ramifié en C₁ à C₂, plus particulièrement parmi un atome d'hydrogène et un groupe méthyle, et
- R^{d} étant un radical alkyle linéaire ou ramifié en C₁ à C₄, en particulier un radical alkyle linéaire ou ramifié en C₁ à C₂, plus particulièrement un groupe méthyle.

En particulier, le composé HBD peut être choisi parmi les composés de formule (I') :

HR^{a}N-C(=X)-NR^{b}R^{c} (1')

avec :
- X étant choisi parmi un atome d'oxygène et un atome de soufre, en particulier étant l'atome d'oxygène,
- R^{a} et R^{b} étant indépendamment l'un de l'autre choisis parmi un atome d'hydrogène et un radical alkyle linéaire ou ramifié en C₁ à C₄, en particulier en C₁ ou C₂, et
- R^{c} étant choisi parmi un atome d'hydrogène, un radical alkyle linéaire ou ramifié en C₁ à C₄, en particulier en C₁ ou C₂, et un radical -C(=X)-NR^{j}R^{k} avec X étant tel que défini précédemment et R^{j} et R^{k} étant indépendamment l'un de l'autre choisis parmi un atome d'hydrogène et un radical alkyle linéaire ou ramifié en C₁ à C₄, en particulier en C₁ ou C₂, en particulier :
   - X étant choisi parmi un atome d'oxygène et un atome de soufre, en particulier étant l'atome d'oxygène, et
   - R^{a}, R^{b} et R^{c} étant indépendamment les uns des autres choisis parmi un atome d'hydrogène et un radical alkyle linéaire ou ramifié en C₁ à C₄, en particulier en C₁ ou C₂, plus particulièrement, au moins un, notamment au moins deux de R^{a}, R^{b} et R^{c} peut être un atome d'hydrogène.

En particulier, le composé HBD peut être choisi parmi l'urée, la N-méthylurée, la N,N'-diméthylurée, la N,N-diméthylurée, le biuret, la thiourée, l'acétamide, la N-méthylacétamide, le benzamide et leurs mélanges, de préférence parmi l'urée, la N-méthylurée, la N,N'-diméthylurée, la N,N-diméthylurée, l'acétamide, la N-méthylacétamide et leurs mélanges. De préférence, le composé HBD est l'urée de formule CO(NH₂)₂.

Le composé HBD peut aussi être choisi parmi les acides carboxyliques comprenant une ou plusieurs fonctions carboxyliques, en particulier parmi les acides monocarboxyliques, les acides dicarboxyliques et les acides tricarboxyliques, en particulier parmi les acides monocarboxyliques.

Le composé HBD peut être un acide monocarboxylique choisi parmi :
- les acides monocarboxyliques hydrocarbonés non aromatiques, saturés ou insaturés, linéaires ou ramifiés, pouvant être substitués par un ou plusieurs groupements hydroxyles ou par un ou plusieurs groupements phényles, en particulier parmi les acides monocarboxyliques hydrocarbonés non aromatiques, non substitués, saturés ou insaturés, linéaires ou ramifiés, possédant de 1 à 24 atomes de carbone, en particulier de 6 à 20 atomes de carbone, voire de 6 à 18 atomes de carbone ; et
- les acides monocarboxyliques aromatiques saturés ou insaturés, en particulier parmi les acides monocarboxyliques aromatiques saturés ou insaturés, possédant de 6 à 12 atomes de carbone, en particulier possédant 7 atomes de carbone.

Le composé HBD peut être choisi parmi l'acide formique, l'acide lactique, l'acide benzoïque, l'acide 3-phenylpropionique, l'acide hexanoïque, l'acide heptanoïque, l'acide octanoïque, l'acide décanoïque, l'acide dodécanoïque, l'acide myristique, l'acide palmitique, l'acide stéarique, l'acide linoléique, l'acide oléique et leurs mélanges.

En particulier, le composé HBD est choisi parmi les acides monocarboxyliques aliphatiques non substitués, saturés ou insaturés, linéaires ou ramifiés, possédant de 6 à 20 atomes de carbone, en particulier de 6 à 18 atomes de carbone, notamment de 8 à 14 atomes de carbone, voire de 10 à 12 atomes de carbone, plus particulièrement parmi les acides monocarboxyliques aliphatiques non substitués, saturés et linéaires possédant de 6 à 20 atomes de carbone, en particulier de 6 à 18 atomes de carbone, notamment de 8 à 14 atomes de carbone, voire de 10 à 12 atomes de carbone.

Un acide monocarboxylique aliphatique peut être un composé de formule R¹-COOH, avec R¹ étant un groupe alkyle linéaire ou ramifié en C₅ à C₁₉ ou un groupe alcényle linéaire ou ramifié en C₅ à C₁₉, en particulier R¹ étant un groupe alkyle linéaire ou ramifié en C₅ à C₁₉.

Un acide monocarboxylique aliphatique non substitué, saturé et linéaire peut être un composé de formule CH₃-(CH₂)ₙ-COOH, avec n étant un entier compris entre 4 et 18, en particulier entre 4 et 16, notamment entre 6 et 12, voire entre 8 et 10.

En particulier, le composé HBD peut être choisi parmi l'acide hexanoïque, l'acide octanoïque, l'acide décanoïque, l'acide dodécanoïque, l'acide myristique, l'acide palmitique, l'acide stéarique, l'acide linoléique, l'acide oléique et leurs mélanges, plus particulièrement parmi l'acide hexanoïque, l'acide octanoïque, l'acide décanoïque, l'acide dodécanoïque, l'acide myristique, l'acide stéarique et leurs mélanges, encore plus particulièrement parmi l'acide hexanoïque, l'acide octanoïque, l'acide décanoïque, l'acide dodécanoïque, l'acide myristique et leurs mélanges. En particulier, le DES comprend, à titre de composé HBD, au moins l'acide décanoïque, l'acide dodécanoïque ou leurs mélanges, plus particulièrement au moins l'acide décanoïque.

Le composé HBD peut être un acide dicarboxylique choisi parmi :
- les acides dicarboxyliques hydrocarbonés non aromatiques, non substitués, saturés ou insaturés, linéaires ou ramifiés, possédant de 2 à 10 atomes de carbone, en particulier de 3 à 8 atomes de carbone, voire de 4 à 6 atomes de carbone ; et
- les acides dicarboxyliques aromatiques possédant de 8 à 13 atomes de carbone, en particulier possédant 8 atomes de carbone.

Le composé HBD peut être un acide dicarboxylique choisi parmi l'acide téréphtalique et les acides dicarboxyliques hydrocarbonés non aromatiques, non substitués, saturés ou insaturés, linéaires ou ramifiés, possédant de 2 à 10 atomes de carbone, en particulier de 3 à 8 atomes de carbone, voire de 4 à 6 atomes de carbone.

Le composé HBD peut être un acide dicarboxylique choisi parmi les acides dicarboxyliques hydrocarbonés non aromatiques, non substitués, saturés ou insaturés, linéaires ou ramifiés, possédant de 2 à 10 atomes de carbone, notamment de 3 à 8 atomes de carbone, voire de 4 à 6 atomes de carbone, en particulier parmi les acides dicarboxyliques hydrocarbonés non aromatiques, non substitués, saturés, linéaires ou ramifiés, possédant de 2 à 10 atomes de carbone, notamment de 3 à 8 atomes de carbone, voire de 4 à 6 atomes de carbone, plus particulièrement parmi les acides dicarboxyliques hydrocarbonés non aromatiques, non substitués, saturés et linéaires, possédant de 2 à 10 atomes de carbone, notamment de 3 à 8 atomes de carbone, voire de 4 à 6 atomes de carbone.

Le composé HBA peut être choisi parmi les acides dicarboxyliques linéaires et saturés de formule HOOC-(CH₂)_{q}-COOH dans laquelle q est un entier compris entre 0 et 8.

En particulier, le composé donneur de liaison hydrogène peut être choisi parmi l'acide oxalique, l'acide malonique, l'acide succinique, l'acide adipique, l'acide azélaique et leurs mélanges, en particulier le DES peut comprendre, à titre de composé HBA, au moins l'acide succinique.

Le composé donneur de liaison hydrogène peut aussi être un acide tricarboxylique, éventuellement substitués par un ou plusieurs groupes hydroxyles, en particulier l'acide citrique.

Il est entendu que, lorsque le composé HBD est un acide carboxylique, le composé HBA est un composé distinct du composé HBD.

Le composé HBD peut aussi être choisi parmi les benzènes substitués par :
- un groupe aldéhyde,
- un groupe de formule -OR^{e} avec R^{e} étant un radical alkyle linéaire ou ramifié en C₁ à C₅, notamment en C₁ à C₃, voire étant un groupe méthyle,
- un groupe de formule -C(=O)-O-X avec X représentant un groupe aromatique hydrocarboné pouvant être substitué un ou plusieurs radicaux alkyles linéaires ou ramifiés en C₁ à C₅, notamment en C₁ à C₃,
- un groupe -NH-C(=O)-Y avec Y représentant une chaîne aliphatique linéaire ou ramifiée, saturée ou insaturée, interrompue par au moins un atome d'azote, et/ou
- un groupe de formule -C(=O)-Z avec Z étant un radical alkyle linéaire ou ramifié en C₁ à C₅, notamment en C₁ à C₃,
et optionnellement substitués par un ou plusieurs groupes choisis parmi :
- les groupes hydroxyles,
- les groupes de formule -NR^{f}R^{g} avec R^{f} et R^{g} étant indépendamment l'un de l'autre un radical alkyle linéaire ou ramifié en C₁ à C₅, notamment en C₁ à C₃ voire étant un groupe méthyle, et
- les radicaux alkyles linéaires ou ramifiés en C₁ à C₅, notamment en C₁ à C₃.

Le composé HBD peut être choisi parmi les benzaldéhyles, en particulier parmi les benzaldéhydes substitués, notamment en position para et/ou meta du groupe aldéhyde, par un ou plusieurs groupes choisis parmi les groupes hydroxyles, les groupes de formule -OR^{e} avec R^{e} étant tel que défini précédemment, et les groupes de formule -NR^{f}R^{g} avec R^{f} et R^{g} étant tels que définis précédemment, en particulier parmi les benzaldéhyles substitués en position para du groupe aldéhyde par un groupe choisi parmi les groupes hydroxyles et les groupes de formule -NR^{f}R^{g} avec R^{f} et R^{g} étant tels que définis précédemment, et optionnellement substitués en position meta du groupe aldéhyde par un groupe de formule - OR^{e} avec R^{e} étant tel que défini précédemment.

De préférence, le composé HBD peut être choisi parmi les benzaldéhydes substitués en position para du groupe aldéhyde par un groupe de formule -NR^{f}R^{g} avec R^{f} et R^{g} étant tels que définis précédemment, et optionnellement substitués en position ortho ou meta du groupe aldéhyde par un ou plusieurs radicaux alkyles linéaire ou ramifiés en C₁ à C₅, notamment en C₁ à C₃, voire par un ou plusieurs groupes méthyl, plus particulièrement parmi les benzaldéhydes substitués en position para du groupe aldéhyde par un groupe de formule -NR^{f}R^{g} avec R^{f} et R^{g} étant tels que définis précédemment.

Le composé HBD peut aussi être choisi parmi les benzènes substitués par un groupe -NH-C(=O)-Y avec Y représentant une chaîne aliphatique linéaire ou ramifiée, saturée ou insaturée, interrompue par au moins un atome d'azote, le benzène étant optionnellement substitués par un ou plusieurs radicaux alkyles linéaires ou ramifiés en C₁ à C₅, notamment en C₁ à C₃. En particulier, Y représente un groupement -(CH₂)ₚ-N-R^{h}Rⁱ, dans laquelle p est un entier compris entre 1 et 5, notamment entre 1 et 3, voire égal à 1, R^{h} et Rⁱ étant indépendamment l'un de l'autre un radical alkyle linéaire ou ramifié en C₁ à C₅, notamment en C₁ à C₃ voire étant un groupe éthyle.

En particulier, le composé HBD peut être choisi parmi le 4-diméthylaminobenzaldéhyde, encore nommé 4-DMAB, la vanilline (4-hydroxyl-3-méthoxybenzaldéhyde), la lidocaïne (2-(diéthylamino)-N-(2,6-diméthylphényl)acétamide), le salicylate de phényle, le méthoxybenzène et leurs mélanges. De préférence, le composé HBD peut être le 4-diméthylaminobenzaldéhyde.

Certains de ces composés, notamment la lidocaïne, peuvent être mis en œuvre à la fois comme HBD et comme HBA. Il est entendu que le composé HBA est un composé distinct du composé HBD. En particulier, lorsque le composé HBD est la lidocaïne, le composé HBA est distinct de la lidocaïne.

Le composé HBD peut aussi être choisi parmi les alcools aliphatiques non substitués, linéaires ou ramifiés, saturés ou insaturés, possédant de 8 à 18 atomes de carbone, notamment de 12 à 16 atomes de carbones, en particulier parmi les alcools aliphatiques non substitués, linéaires et saturés possédant de 8 à 18 atomes de carbone, notamment de 12 à 16 atomes de carbone. En particulier, le composé HBD peut être le 1-tétradécanol.

Le composé HBD peut aussi être la coumarine (2H-1-benzopyrane-2-one) ou l'eau.

Le composé HBD peut aussi être choisi parmi les monoterpénoïdes comportant au moins un groupe fonctionnel oxygéné et leurs mélanges, notamment tels que décrits précédemment. Le composé HBD peut être un monoterpénoïde choisi parmi le thymol, le menthol, la carvone, l'eucalyptol, le bornéol, le carvacrol, l'acétate de bornyle, le camphre, le citral, le citronellal, le géraniol, l'hinokitiol, l'iridoïde, le linalol et leurs mélanges, notamment parmi le menthol, le thymol et leurs mélanges.

En particulier, un monoterpénoïde, peut être mis en œuvre à la fois comme HBD et comme HBA. Il est entendu que, lorsque le composé HBD est un monoterpénoïde, le composé HBA est un composé distinct du composé HBD, par exemple peut être un monoterpénoïde distinct du monoterpénoïde mis en œuvre à titre de composé HBD.

En particulier, le composé HBD peut être choisi parmi les composés de formule HR^{a}N-C(=X)-R^{d} (I), avec X étant choisi parmi un atome d'oxygène et un atome de soufre, R^{a} étant choisi parmi un atome d'hydrogène et un radical alkyle linéaire ou ramifié en C₁ à C₄ pouvant être substitué par un ou plusieurs groupes hydroxyles, et R^{d} étant choisi parmi un radical alkyle linéaire ou ramifié en C₁ à C₄ pouvant être substitué par un ou plusieurs groupes hydroxyles, un radical phényl pouvant être substitué par un ou plusieurs groupes hydroxyles, et un radical -NR^{b}R^{c} avec R^{b} étant choisi parmi un atome d'hydrogène et un radical alkyle linéaire ou ramifié en C₁ à C₄ pouvant être substitué par un ou plusieurs groupes hydroxyles, et R^{c} étant choisi parmi un atome d'hydrogène, un radical alkyle linéaire ou ramifié en C₁ à C₄ pouvant être substitué par un ou plusieurs groupes hydroxyles, et un radical -C(=X)-NRⁱR^{k} avec X étant tel que défini précédemment et R^{j} et R^{k} étant indépendamment l'un de l'autre choisis parmi un atome d'hydrogène et un radical alkyle linéaire ou ramifié en C₁ à C₄ pouvant être substitué par un ou plusieurs groupes hydroxyles, les benzaldéhydes substitués en position para des groupes aldéhydes par un groupe de formule -NR^{f}R^{g} avec R^{f} et R^{g} étant indépendamment l'un de l'autre un radical alkyle linéaire ou ramifié en C₁ à C₅, notamment en C₁ à C₃ voire étant un groupe méthyle, et optionnellement substitués en position ortho ou meta des groupes aldéhydes par un ou plusieurs radicaux alkyles linéaire ou ramifiés en C₁ à C₅, et leurs mélanges,
en particulier parmi les composés de formule HR^{a}N-C(=X)-R^{d} (I), avec X étant choisi parmi un atome d'oxygène et un atome de soufre, R^{a} étant choisi parmi un atome d'hydrogène et un radical alkyle linéaire ou ramifié en C₁ à C₄ pouvant être substitué par un ou plusieurs groupes hydroxyles, et R^{d} étant choisi parmi un radical alkyle linéaire ou ramifié en C₁ à C₄ pouvant être substitué par un ou plusieurs groupes hydroxyles, et un radical -NR^{b}R^{c} avec R^{b} étant choisi parmi un atome d'hydrogène et un radical alkyle linéaire ou ramifié en C₁ à C₄ pouvant être substitué par un ou plusieurs groupes hydroxyles, et R^{c} étant choisi parmi un atome d'hydrogène, un radical alkyle linéaire ou ramifié en C₁ à C₄ pouvant être substitué par un ou plusieurs groupes hydroxyles, et un radical -C(=X)-NR^{j}R^{k} avec X étant tel que défini précédemment et R^{j} et R^{k} étant indépendamment l'un de l'autre choisis parmi un atome d'hydrogène et un radical alkyle linéaire ou ramifié en C₁ à C₄ pouvant être substitué par un ou plusieurs groupes hydroxyles, le 4-diméthylaminobenzaldéhyde, et leurs mélanges.

En particulier, le composé HBD peut être choisi parmi l'urée, la N-méthylurée, la N,N'-diméthylurée, la N,N-diméthylurée, l'acétamide, la N-méthylacétamide, le 4-diméthylaminobenzaldéhyde et leurs mélanges.

De préférence, le composé HBD est choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄, de préférence choisi parmi l'urée, la N-méthylurée, la N,N'-diméthylurée, la N,N-diméthylurée, l'acétamide, la N-méthylacétamide et leurs mélanges. De préférence, le solvant eutectique profond comprend au moins l'urée.

Le composé HBD et/ou le composé HBA peut avantageusement être sélectionné pour procurer un caractère hydrophobe et/ou non ionique au DES
En particulier, le DES est un solvant eutectique profond de classe V, en particulier comprenant des composés extraits de produits naturels.

Les monoterpénoïdes, en particulier tels que décrits précédemment, sont particulièrement avantageux pour former des DES de classe V non ioniques, en combinaison avec un composé HBD ou HBA non ionique.

Selon un mode de réalisation particulier, le DES comprend, voire consiste en :
- au moins un composé HBD choisi parmi les composés de formule HR^{a}N-C(=X)-R^{d} (I), avec X étant choisi parmi un atome d'oxygène et un atome de soufre, R^{a} étant choisi parmi un atome d'hydrogène et un radical alkyle linéaire ou ramifié en C₁ à C₄ pouvant être substitué par un ou plusieurs groupes hydroxyles, et R^{d} étant choisi parmi un radical alkyle linéaire ou ramifié en C₁ à C₄ pouvant être substitué par un ou plusieurs groupes hydroxyles, un radical phényl pouvant être substitué par un ou plusieurs groupes hydroxyles, et un radical -NR^{b}R^{c} avec R^{b} étant choisi parmi un atome d'hydrogène et un radical alkyle linéaire ou ramifié en C₁ à C₄ pouvant être substitué par un ou plusieurs groupes hydroxyles, et R^{c} étant choisi parmi un atome d'hydrogène, un radical alkyle linéaire ou ramifié en C₁ à C₄ pouvant être substitué par un ou plusieurs groupes hydroxyles, et un radical -C(=X)-NR^{j}R^{k} avec X étant tel que défini précédemment et R^{j} et R^{k} étant indépendamment l'un de l'autre choisis parmi un atome d'hydrogène et un radical alkyle linéaire ou ramifié en C₁ à C₄ pouvant être substitué par un ou plusieurs groupes hydroxyles, les benzaldéhydes substitués en position para des groupes aldéhydes par un groupe de formule -NR^{f}R^{g} avec R^{f} et R^{g} étant indépendamment l'un de l'autre un radical alkyle linéaire ou ramifié en C₁ à C₅, notamment en C₁ à C₃ voire étant un groupe méthyle, et optionnellement substitués en position ortho ou meta par un ou plusieurs radicaux alkyles linéaire ou ramifiés en C₁ à C₅, et leurs mélanges, et
- au moins un composé HBA choisi parmi les monoterpénoïdes comportant au moins un groupe fonctionnel oxygéné et leurs mélanges.

En particulier, le DES comprend, voire consiste en :
- au moins un composé HBD choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄, les benzaldéhydes substitués en position para des groupes aldéhydes par un groupe de formule -NR^{f}R^{g} avec R^{f} et R^{g} étant indépendamment l'un de l'autre un radical alkyle linéaire ou ramifié en C₁ à C₅, notamment en C₁ à C₃ voire étant un groupe méthyle, et leurs mélanges, et
- au moins un composé HBA choisi parmi les monoterpénoïdes comportant au moins un groupe hydroxyle, les monoterpénoïdes comportant au moins un groupe carbonyle, les monoterpénoïdes comportant au moins un groupe éther cyclique, et leurs mélanges.

Plus particulièrement, le solvant eutectique profond comprend, voire consiste en :
- au moins un composé HBD choisi parmi l'urée, la N-méthylurée, la N,N'-diméthylurée, la N,N-diméthylurée, l'acétamide, la N-méthylacétamide, le 4-diméthylaminobenzaldéhyde et leurs mélanges, et
- au moins un composé HBA choisi parmi le menthol, la carvone, le thymol, l'eucalyptol, le bornéol, le carvacrol, et leurs mélanges.

Le DES peut comprendre, voire consister en :
- un mélange d'un composé accepteur de liaison hydrogène (HBA) choisi parmi les monoterpénoïdes comportant au moins un groupe fonctionnel oxygéné et d'un composé donneur de liaison hydrogène (HBD) choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄ ; ou
- un mélange d'un composé accepteur de liaison hydrogène (HBA) choisi parmi les monoterpénoïdes comportant au moins un groupe fonctionnel oxygéné et d'un composé donneur de liaison hydrogène (HBD) choisi parmi les benzaldéhydes substitués en position para des groupes aldéhydes par un groupe de formule -NR^{f}R^{g} avec R^{f} et R^{g} étant indépendamment l'un de l'autre un radical alkyle linéaire ou ramifié en C₁ à C₅, notamment en C₁ à C₃ voire étant un groupe méthyle, et optionnellement substitués en position ortho ou meta des groupes aldéhydes par un ou plusieurs radicaux alkyles linéaire ou ramifiés en C₁ à C₅, et leurs mélanges, en particulier le composé HBD étant le 4-diméthylaminobenzaldéhyde.

En particulier, le DES peut comprendre, voire consister en, un mélange de thymol et d'un composé donneur de liaison hydrogène (HBD) choisi parmi le 4-diméthylaminobenzaldéhyde et les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄.

Selon un mode de réalisation préféré, le DES comprend, voire consiste en, un mélange d'un composé accepteur de liaison hydrogène (HBA) choisi parmi les monoterpénoïdes comportant au moins un groupe fonctionnel oxygéné et leurs mélanges, et d'un composé donneur de liaison hydrogène (HBD) choisi parmi les composés de formule HR^{a}N-C(=X)-R^{d} (I), avec X étant choisi parmi un atome d'oxygène et un atome de soufre, R^{a} étant choisi parmi un atome d'hydrogène et un radical alkyle linéaire ou ramifié en C₁ à C₄ pouvant être substitué par un ou plusieurs groupes hydroxyles, et R^{d} étant choisi parmi un radical alkyle linéaire ou ramifié en C₁ à C₄ pouvant être substitué par un ou plusieurs groupes hydroxyles, un radical phényl pouvant être substitué par un ou plusieurs groupes hydroxyles, et un radical -NR^{b}R^{c} avec R^{b} étant choisi parmi un atome d'hydrogène et un radical alkyle linéaire ou ramifié en C₁ à C₄ pouvant être substitué par un ou plusieurs groupes hydroxyles, et R^{c} étant choisi parmi un atome d'hydrogène, un radical alkyle linéaire ou ramifié en C₁ à C₄ pouvant être substitué par un ou plusieurs groupes hydroxyles, et un radical -C(=X)-NR^{j}R^{k} avec X étant tel que défini précédemment et R^{j} et R^{k} étant indépendamment l'un de l'autre choisis parmi un atome d'hydrogène et un radical alkyle linéaire ou ramifié en C₁ à C₄ pouvant être substitué par un ou plusieurs groupes hydroxyles, et leurs mélanges,
en particulier un mélange d'un composé accepteur de liaison hydrogène (HBA) choisi parmi les monoterpénoïdes comportant au moins un groupe fonctionnel oxygéné et leurs mélanges, et d'un composé donneur de liaison hydrogène (HBD) choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄.

De préférence, le DES comprend, voire consiste en, un mélange d'un composé accepteur de liaison hydrogène (HBA) choisi parmi les monoterpénoïdes comportant au moins un groupe hydroxyle, les monoterpénoïdes comportant au moins un groupe carbonyle, les monoterpénoïdes comportant au moins un groupe éther cyclique et leurs mélanges, et d'un composé donneur de liaison hydrogène (HBD) choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄,
en particulier un mélange d'un composé accepteur de liaison hydrogène (HBA) choisi parmi le menthol, la carvone, le thymol, l'eucalyptol, le bornéol, le carvacrol, et leurs mélanges, et d'un composé donneur de liaison hydrogène (HBD) choisi parmi l'urée, la N-méthylurée, la N,N'-diméthylurée, la N,N-diméthylurée, l'acétamide, la N-méthylacétamide et leurs mélanges.

De préférence, le DES comprend, voire consiste en, un mélange de thymol et d'un composé donneur de liaison hydrogène (HBD) choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄,
encore plus particulièrement comprend, voire consiste en, un mélange de thymol et d'un composé donneur de liaison hydrogène (HBD) choisi parmi l'urée, la N-méthylurée, la N,N'-diméthylurée, la N,N-diméthylurée, l'acétamide, la N-méthylacétamide et leurs mélanges. Selon un mode de réalisation particulièrement préféré, le solvant eutectique profond comprend, voire consiste en, un mélange de thymol et d'urée.

Le rapport molaire entre les composés HBD et HBA est avantageusement ajusté pour correspondre au point eutectique du mélange des composés HBD et HBA.

Les DES peuvent être préparés de manière connue par l'homme du métier. Par exemple, ses composés HBD et HBA sont mélangés à l'état fondu dans un rapport molaire adéquat jusqu'à obtention d'un mélange homogène. Les DES peuvent également être préparés par mélange des composés HBD et HBA à l'état solide pour obtenir un mélange liquide. Par exemple, les composés HBD et HBA peuvent être brassés, agités ou mélangés à l'état solide, notamment sous la forme de poudre, de flocons et/ou de paillettes avec le textile, les composés passant progressivement à l'état liquide jusqu'à obtenir un DES.

En particulier, le DES peut comprendre, voire consister en :
- un mélange de thymol et de 4-diméthylaminobenzaldéhyde dans un rapport molaire thymol : 4-diméthylaminobenzaldéhyde compris entre 0,2:1 et 5:1, notamment entre 0,5:1 et 1,5:1, voire entre 0,7:1 et 1,3:1, de préférence égal à 1:1 ; ou
- un mélange de thymol et d'urée dans un rapport molaire thymol : urée compris entre 2:1 et 10:1, notamment entre 4:1 et 6:1, voire entre 4,5:1 et 5,5:1, de préférence égal à 5:1.

De préférence, le DES comprend, voire consiste en, un mélange de thymol et d'urée dans un rapport molaire thymol : urée compris entre 2:1 et 10:1, notamment entre 4:1 et 6:1, voire entre 4,5:1 et 5,5:1, de préférence égal à 5:1.

Le DES peut présenter une viscosité à 50°C inférieure ou égale à 50 mPa.s, en particulier allant de 1 mPa.s à 10 mPa.s, plus particulièrement de 2 mPa.s à 6 mPa.s, notamment de 3 mPa.s à 5 mPa.s.

### Exemple de procédé selon l'invention

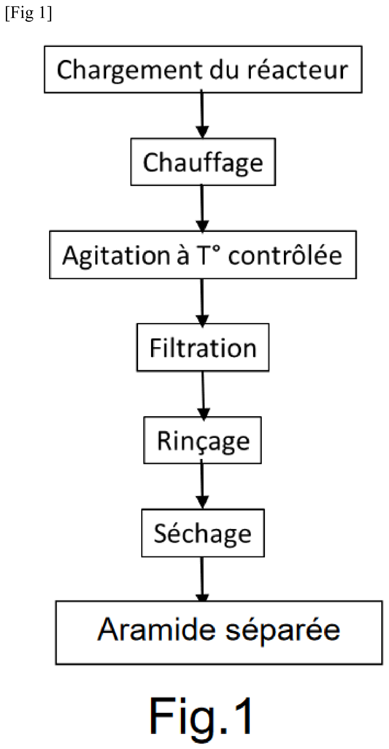

La figure 1 est un synoptique des étapes du procédé de recyclage selon l'invention
Les inventeurs ont réalisé les essais précédents selon ce procédé avec les paramètres suivants.

Un réacteur a été chargé avec un mélange de morceaux de matériau composite (Q1) et un solvant DES d'intérêt, hydrophobe, constitué d'un mélange de thymol et d'urée dans un rapport molaire thymol:urée égal à 5:1 (Q2).

Un chauffage du mélange au sein du réacteur a eu lieu à une température T° avec une agitation pendant une durée t. Le tableau 2 ci-dessous détaille les limites de gammes de ces paramètres en corrélation avec le ratio massique Q1/Q2.

**[Tableau 2]**

| | | |
|---|---|---|
| Température (°C) | 30 | 90 |
| Temps (h) | 0,5 | 6 |
| Ratio massique Q1/Q2 | 0,3 | 0,6 |

Les morceaux séparés sont ensuite filtrés à chaud, puis subissent un rinçage à l'éthanol. Enfin, les morceaux rincés sont séchés à l'ambiant.

Les morceaux, mis initialement dans le réacteur, sont des échantillons de textiles composite comme suit :
- textile multicouches laminé de fibres aramides laminées avec un film PU (Echantillon A),
- textile laminé de fibres aramides enduites avec un film PE (Echantillon B),
- textile laminé de fibres aramides enduites avec une résine PA (Echantillon C).

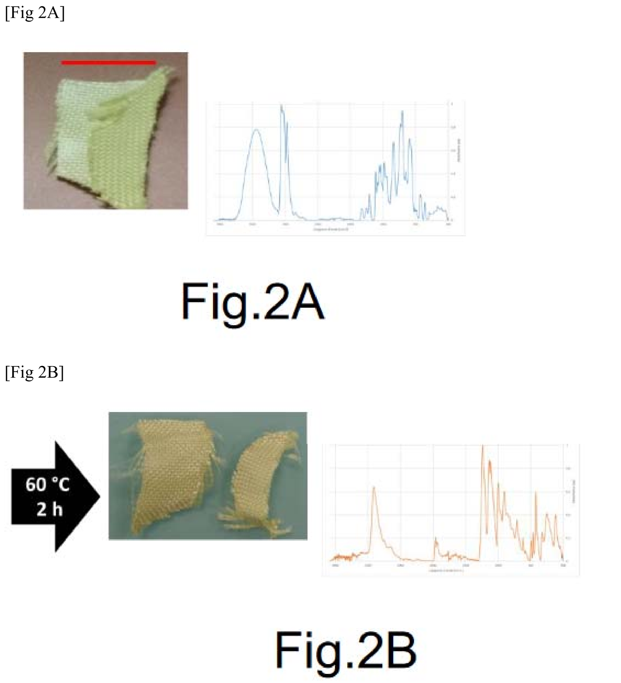

Les figures 2A et 2B montrent respectivement l'échantillon A ainsi que son spectre caractéristique obtenu par spectroscopie infrarouge à transformée de Fourier (FTIR), respectivement avant sa mise dans le réacteur et après le séchage en sortie du réacteur du morceau de fibres d'aramides obtenu.

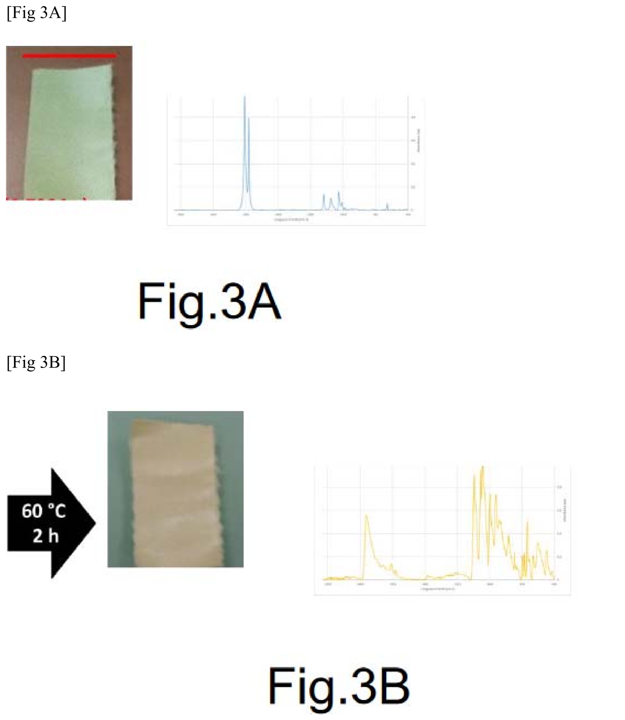

Les figures 3A et 3B montrent respectivement l'échantillon B ainsi que son spectre caractéristique FTIR, respectivement avant sa mise dans le réacteur et après le séchage en sortie du réacteur du morceau de fibres d'aramides obtenu.

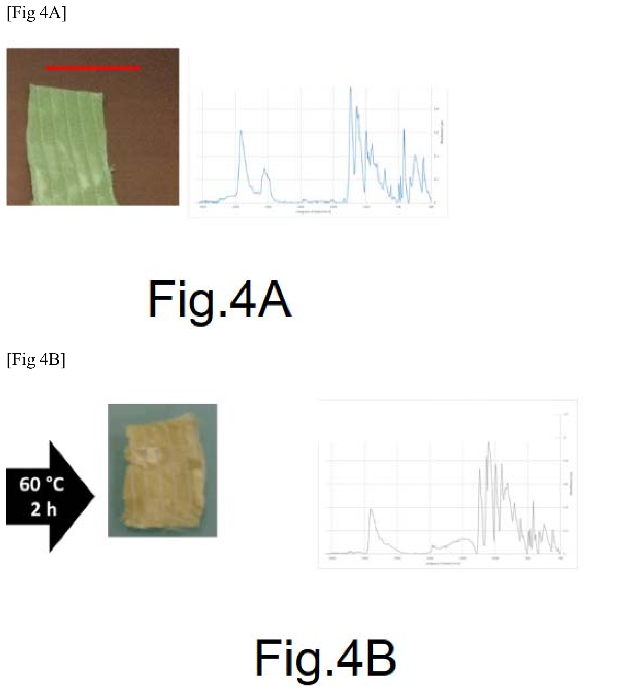

Les figures 4A et 4B montrent respectivement l'échantillon C ainsi que son spectre caractéristique FTIR, respectivement avant sa mise dans le réacteur et après le séchage en sortie du réacteur du morceau de fibres d'aramides obtenu.

On constate qu'à la fin du procédé, les spectres FTIR sont identiques pour tous les échantillons et caractéristiques de l'aramide.

Les pertes de masse calculées avant et après lavage à la sortie du réacteur étaient respectivement de 14%, de 4% et 13% pour les échantillons A, B, C.

L'analyse FTIR conjuguée à ces pertes de masse permet de déduire que l'aramide a été purifiée et/ou séparée des matériaux de lamination (PU ou PE ou PA).

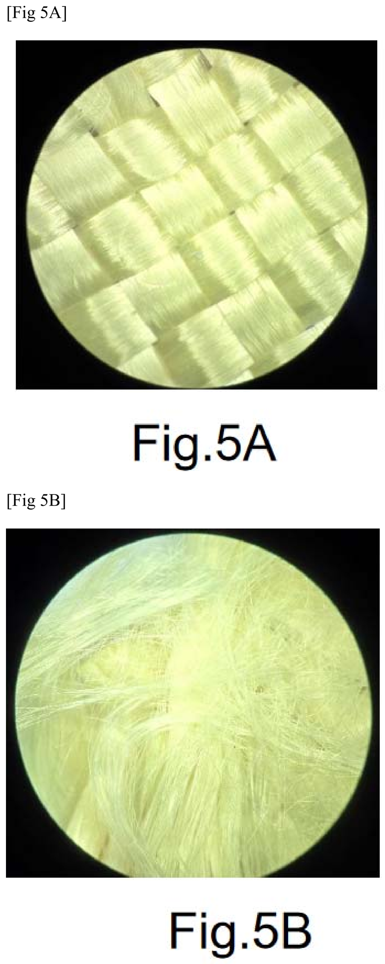

Les figures 5A et 5B montrent un échantillon A respectivement avant et après le procédé.

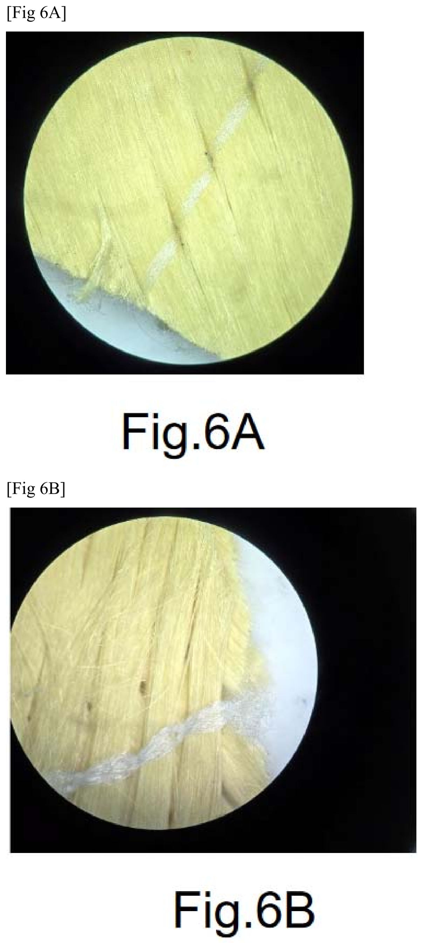

Les figures 6A et 6B montrent un échantillon C respectivement avant et après le procédé.

### Liste des références citées

[1] : R. Pinzelli, « Fibres aramides pour matériaux composites », Techniques de l'ingénieur, réf A3985 V1, 1995.
[2]: YOUNG S. LEE, *"The ballistic impact characteristics of Kevlar^{®} woven fabrics impregnated with a colloidal shear thickening fluid",* JOURNAL OF MATERIALS SCIENCE 3 8 (2 0 0 3 ) 2825 - 2833.
*[3]: "Kevlar-based Composite Material and its applications in body armor"* Nair_2020_IOP_Conf._Ser._Mater._Sci._Eng._987_012003.
[4]: Dong MA and al: "Shock wave mitigation and impact resistance response of kevlar fabric with novel shear-stiffening gel core" Journal of Materials Research and Technology, Volume 27, November-December 2023, Pages 839-851.
[5]: Blazsó, M. (2010). "Pyrolysis for recycling waste composites. In: Management, Recycling and Reuse of Waste Composites." Elsevier, 102-121, https://doi.org/10.1533/9781845697662.2.102.
[6]: Emese Sebe, Andràs Arnold Kállay, "ARAMID FIBER RECOVERY FROM WASTE COMPOSITE BY PYROLYSIS", Multidiszciplináris tudomànyok, 13. kötet., 2. sz. (2023), pp. 70-77 https://doi.org/10.35925/j.multi.2023.2.6.
[7]: Dabkiewicz, I., Silva, Í. V. S., Marcuzzo, J. S., Contini, R. D. C. M. S. (2016)." Study of Aramid Fiber/Polychloroprene Recycling Process by Thermal Degradation." J. Aerosp. Technol. Manag., 8 (3), 373-377, Aug., https://doi.org/10.5028/jatm.v8i3.593
[8]: Awais, M.; Tausif, M.; Ahmad, F.; Jabbar, A.; Ahmad, S. "Inclusion of Recycled PPTA Fibre in Development of Cut-Resistant Gloves." J. Text. Inst. 2015, 106 (4), 354-358
[9]: E. L. Smith, A. P. Abbott, et K. S. Ryder, « Deep Eutectic Solvents (DESs) and Their Applications », Am. Chem. Soc., no 114, p. 11060-11082, 2014.
[10]: P. Makoś, E. Slupek, J. G 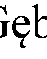 bicki, « Hydrophobic deep eutectic solvents in microextraction techniques-A review », Microchemical Journal, Vol. 152, 2020.

## Revendications

1. Procédé de recyclage, d'un produit composite neuf défectueux, ou usagé, comprenant initialement au moins une couche d'aramide et au moins une couche en un autre matériau, le procédé comprenant une étape d'immersion de tout ou partie du produit, dans au moins un solvant eutectique profond (DES), de sorte à séparer physiquement la couche d'aramide de l'autre au moins un matériau.

2. Procédé de recyclage selon la revendication 1, le solvant eutectique profond (DES) étant hydrophobe, en particulier non ionique.

3. Procédé de recyclage selon la revendication 1 ou 2, le solvant eutectique profond (DES) comprenant au moins un composé accepteur de liaison hydrogène (HBA) choisi parmi les monoterpénoïdes comportant au moins un groupe fonctionnel oxygéné et leurs mélanges, en particulier parmi les monoterpénoïdes comportant au moins un groupe hydroxyle, les monoterpénoïdes comportant au moins un groupe carbonyle, les monoterpénoïdes comportant au moins un groupe éther cyclique et leurs mélanges, plus particulièrement parmi le menthol, la carvone, le thymol, le bornéol, le carvacrol, l'eucalyptol et leurs mélanges, notamment parmi le menthol, le thymol et leur mélange, de préférence le solvant eutectique profond (DES) comprenant au moins le thymol.

4. Procédé de recyclage selon l'une quelconque des revendications précédentes, le solvant eutectique profond (DES) comprenant au moins un composé donneur de liaison hydrogène (HBD) choisi parmi le 4-diméthylaminobenzaldéhyde, les composés de formule HR^{a}N-C(=X)-R^{d} (I), avec X étant choisi parmi un atome d'oxygène et un atome de soufre, R^{a} étant choisi parmi un atome d'hydrogène et un radical alkyle linéaire ou ramifié en C₁ à C₄ pouvant être substitué par un ou plusieurs groupes hydroxyles, et R^{d} étant choisi parmi un radical alkyle linéaire ou ramifié en C₁ à C₄ pouvant être substitué par un ou plusieurs groupes hydroxyles, et un radical -NR^{b}R^{c} avec R^{b} étant choisi parmi un atome d'hydrogène et un radical alkyle linéaire ou ramifié en C₁ à C₄ pouvant être substitué par un ou plusieurs groupes hydroxyles, et R^{c} étant choisi parmi un atome d'hydrogène, un radical alkyle linéaire ou ramifié en C₁ à C₄ pouvant être substitué par un ou plusieurs groupes hydroxyles, et un radical -C(=X)-NR^{j}R^{k} avec X étant tel que défini précédemment et R^{j} et R^{k} étant indépendamment l'un de l'autre choisis parmi un atome d'hydrogène et un radical alkyle linéaire ou ramifié en C₁ à C₄ pouvant être substitué par un ou plusieurs groupes hydroxyles, et leurs mélanges, en particulier choisi parmi les composés de formule HR^{a}N-C(=O)-R^{d} (1), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄, de préférence choisi parmi l'urée, la N-méthylurée, la N,N'-diméthylurée, la N,N-diméthylurée, l'acétamide, la N-méthylacétamide et leurs mélanges, plus préférentiellement le solvant eutectique profond comprenant au moins l'urée.

5. Procédé selon l'une quelconque des revendications précédentes, le solvant eutectique profond comprenant, voire consistant en :
- un mélange d'un composé accepteur de liaison hydrogène (HBA) choisi parmi les monoterpénoïdes comportant au moins un groupe fonctionnel oxygéné et leurs mélanges, et d'un composé donneur de liaison hydrogène (HBD) choisi parmi le 4-diméthylaminobenzaldéhyde, les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄, et leurs mélanges ;
en particulier comprenant, voire consistant en, un mélange d'un composé accepteur de liaison hydrogène (HBA) choisi parmi les monoterpénoïdes comportant au moins un groupe hydroxyle, les monoterpénoïdes comportant au moins un groupe carbonyle, les monoterpénoïdes comportant au moins un groupe éther cyclique et leurs mélanges, et d'un composé donneur de liaison hydrogène (HBD) choisi parmi les composés de formule HR^{a}N-C(=O)-R^{d} (I), avec R^{a} étant choisi parmi un atome d'hydrogène et un radical alkyle non substitué, linéaire ou ramifié, en C₁ à C₄, et R^{d} étant choisi parmi un radical alkyle non substitué, linéaire ou ramifié, en C₁ à C₄ et un radical -NR^{b}R^{c} avec R^{b} et R^{c} étant indépendamment l'un de l'autre choisis parmi un atome d'hydrogène et un radical alkyle, non substitué, linéaire ou ramifié en C₁ à C₄ ;
plus particulièrement comprenant, voire consistant en, un mélange de thymol et d'un composé donneur de liaison hydrogène (HBD) choisi parmi l'urée, la N-méthylurée, la N,N'-diméthylurée, la N,N-diméthylurée, l'acétamide, la N-méthylacétamide et leurs mélanges ;
de préférence comprenant, voire consistant en, un mélange de thymol et d'urée dans un rapport molaire thymol : urée compris entre 2:1 et 10:1, notamment entre 4:1 et 6:1, voire entre 4,5:1 et 5,5:1, de préférence égal à 5:1.

6. Procédé de recyclage selon l'une des revendications précédentes, la couche d'aramide étant à base de fibres d'aramide.

7. Procédé de recyclage selon l'une des revendications précédentes, l'étape d'immersion étant réalisée à une température comprise entre 30 et 90 °C, de préférence pendant une durée de 15 min à 3 h, notamment de 1 h à 2 h.

8. Procédé de recyclage selon l'une des revendications précédentes, l'étape d'immersion étant réalisée par agitation à une température contrôlée.

9. Procédé de recyclage selon l'une des revendications précédentes, comprenant, pendant ou après l'étape d'immersion, une étape de filtration et de régénération du solvant eutectique profond (DES).

10. Procédé de recyclage selon la revendication 9, la régénération étant réalisée soit par barbotage d'azote, soit par changement de température ou de pression, soit par sublimation sous vide.

11. Procédé de recyclage selon l'une des revendications précédentes, comprenant, après l'étape d'immersion, une étape de séchage de la couche d'aramide séparée physiquement.
